# EUROPÄISCHE PATENTSCHRIFT

(11) **EP 1 465 441 B1**
(45) Veröffentlichungstag und Bekanntmachung des Hinweises auf die Patenterteilung: **14.06.2006**
(21) Anmeldenummer: 03007834.9
(22) Anmeldetag: 04.04.2003
(51) Int. Cl.: H04Q 7/22, H04Q 7/24

(54) **Erweiterung des SMS-Kurznachrichtendienstes unter Verwendung standardisierter CAMEL-Features**
Extension of SMS services by using standardized CAMEL features
Extension d'un service d'envoi de messages courts (SMS) en utilisant des caractéristiques standardisées du type CAMEL

(43) Veröffentlichungstag der Anmeldung: 06.10.2004
(73) Patentinhaber: SIEMENS AKTIENGESELLSCHAFT, 80333 München (DE)
(72) Erfinder: Reininghaus, Georg, 1130 Wien (AT)

(56) Entgegenhaltungen:
- EP-A- 1 211 904
- WO-A-01/19104
- WO-A-02/07454
- WO-A-98/28920
- "ETSI TS 123 078, V4.4.0, Digital cellular telecommunications system (Phase 2+) (GSM); Universal Mobile Telecommunications System (UMTS); Customised Applications for Mobile network Enhanced Logic (CAMEL) Phase 3 - Stage 2 (*GPP TS 23.078 version 4.4.0 Release 4)" ETSI, Seiten 360-389, XP002252549

## Beschreibung

### Fachgebiet der Erfindung

Der Kurznachrichtendienst (Short Message Service) in einem Mobilfunknetz ist einer der beliebtesten Dienste.
Um die Verteilung der Kurznachrichten zu gewährleisten, ist im Mobilfunknetz ein Netzelement SMSC (Short Message Service Center) eingerichtet. Sendet ein Teilnehmer eine Kurznachricht von seinem Endgerät ab (sogenannte "Mobile-Originated Short Message") so wird diese zunächst von einer Mobil-Vermittlungsstelle MSC empfangen. Von dort wird die Kurznachricht an das SMSC gesendet, welches sich dann um die Auslieferung an den Empfänger kümmert (und gegebenenfalls die Nachricht zwischenspeichert). Sofern sich der Empfänger in einem anderen Netz befindet als der Sender, wird noch eine "Besuchte Vermittlungsstelle" eingeschaltet, die IWMSC (Interworking MSC).

Obwohl die meisten GSM Netzbetreiber inzwischen seit längerer Zeit diesen Kurznachrichten-Dienst (Short Message Service, SMS) anbieten, sind erweiterte Features für den Kurznachrichten-Dienst schwierig zu implementieren.
Besonders problematisch ist beispielsweise die Implementierung eines Dienstes zur Verteilung von einer Kurznachricht an mehrere mobile Endgeräte gleichzeitig. Auch eine Gateway-Funktionalität zwischen Kurznachrichten-Dienst und E-Mail ist derzeit sehr aufwendig zu realisieren und bietet nur eingeschränkte Möglichkeiten.

### Stand der Technik

Der allgemeine Standard zur technischen Realisierung von SMS Diensten ist 3GPP TS 23.040 - Technical Specification, 3^{rd} Generation Partnership Project; Technical Specification Group Terminals; Technical realization of the Short Message Service (SMS), in der derzeit aktuellen Version V5.5.1 (2002-9) festgehalten. Eine Beschreibung mit Ablaufdiagramm zur Versendung von "Short Message Mobile Originated" findet sich im Kapitel 10.2. der Beschreibung.

Weitere Standards existieren beispielsweise zur Netzarchitektur (3GPP TS 23.002) und zu "Customized Applications for Mobile network Enhanced Logic" (CAMEL, 3GPP TS 23.078).

Eine Möglichkeit zur Verteilung von Kurznachrichten an mehrere Empfänger ist durch das "Broadcast"-Feature gegeben (3GPP TS 23.041). Hier wird die Nachricht an alle Teilnehmer gesendet, die sich zu einem bestimmten Zeitpunkt gerade in der Funkzelle befinden. Der Sender kann jedoch die Empfänger nicht selber bestimmen.

Die Druckschrift DE 199 44 736 beschreibt einen Rundsendedienst für Kurznachrichten, bei dem an eine vorbestimmte Mehrzahl von Empfängern eine Nachricht mit Hilfe der Dienststeuerfunktionen (SCF, SRF) einer intelligenten Netzstruktur versendet wird.

Auch in WO 97/44924 wird ein solcher spezieller Multicasting Dienst in einem Intelligenten Netz beschrieben.

Dokument WO 02/07454 beschreibt ein rufunabhängiges Triggering in einem Intelligenten Netz sowie ein generelles Ändern von Kurznachrichten-Adressen durch einen SCP.

Derzeitige Realisierungen der oben beschriebenen Features enthalten folgende Nachteile:
- Realisierung im Kurznachrichten-Zentrum (Short Message Center, SMSC): sowohl die Funktionalität als auch die Teilnehmerdaten (subscriber data) sind über mehrere Systeme verteilt, welche in der Regel auch von verschiedenen Herstellern stammen. Die Administration der Teilnehmer-Daten ist nicht zentral möglich, dies macht die Verwaltung und die Kundenbetreuung umständlich und teuer.
- Realisierung durch einen zentralen Zugang (Gateway): hier sind zusätzliche Netzelemente erforderlich. Diese benötigen Schnittstellen zu den Kurznachrichten-Zentren (Short Message Center, SMSC) der verschiedenen Hersteller. Ein Zugriff für Selbst-Administration durch den Teilnehmer ist in der Regel nicht vorgesehen, weil der Realisierungsaufwand hoch ist.

Aufgabe der Erfindung ist es, eine vielseitig verwendbare Lösung für die Realisierung eines verbesserten Kurznachrichten-Dienstes anzugeben.

### Darstellung der Erfindung

Diese Aufgabe wird gelöst durch ein Verfahren gemäß einem der Ansprüche 1 oder 3 und einer Vorrichtung gemäß dem Patentanspruch 5.

Die grundlegende Idee besteht darin, die Camel Service Environment (CSE) Funktionalitäten in ein Intelligentes Netz zu integrieren. Zu diesem Zweck werden standardisierte CAMEL Features für die Behandlung von abgesendeten Kurznachrichten SMS-MO verwendet.

CAMEL steht für "Customized Application for Mobile Enhanced network Logik" und wurde eingeführt, um IN Funktionalität (Dienste) über Netzgrenzen anbieten zu können. Damit neue Dienste nicht in den fremden Netzen implementieren werden müssen, wird bei CAMEL die Dienstelogik nur im Heimatnetz implementiert und sowohl im Heimatnetz als auch in den besuchten Netzen sind lediglich standardisierte dienstunabhängige Funktionen erforderlich. Der Dienstesteuerungsknoten (bei Intelligenten Netzen "Service Control Point", SCP, genannt) trägt in den CAMEL Standards die Bezeichnung CSE (Camel Service Environment).

### Die Lösung bietet die folgenden Vorteile:

Die Teilnehmerdaten und Anwendung sind auf dem Dienstesteuerungsknoten CSE zentralisiert. Für diese Zwecke erhältliche IN-Systeme bieten flexible Möglichkeiten zum Anlegen von Datenstrukturen und den erforderlichen DiensteLogik Programmen für alle Arten von Funktionalitäten.

Ein weiterer Vorteil liegt darin, dass IN-Systeme eine Anzahl verschiedener Zugriffstypen anbieten, zur Administration durch den Kunden oder Teilnehmer selber: z. B. ein sprachgesteuertes Menü, Unstructured Supplementary Service Data (USSD) oder Zugriff über das Internet. Da die Daten zentral abgelegt sind, ist der Aufwand für die Integration des Adminstrations-Systems und der Kundenbetreuung minimiert.

Zwischen CSE, Vermittlungsstelle und SMSC werden nur bereits standardisierte Schnittstellen verwendet: CAMEL Application Part (CAP, 3GPP TS 29.078), Mobile Application Part (MAP, 3GPP TS 29.002), Base Station Application Part (BSSAP, GSM 08.06,), INAP (ETSI EN 301 140-1: Intelligent Network Application Protocol - CS2) und POP3 (Post Office Protocol-Version 3, RFC 1939). Es gibt keine Auswirkungen auf die Funktionalitäten der Vermittlungsstelle oder des SMSC. Deshalb funktioniert diese Lösung auch im Fall von Roaming. Alternativ können herstellereigene INAP Protokolle oder von POP3 verschiedene E-Mail Protokolle benutzt werden.

Die Anwendungen haben Zugriff auf den kompletten Satz der CAMEL Trigger Informationen von IDPSMS (CdPA, CgPA, location information, ...) als auch den Inhalt der SMS über POP3. Die vollständige Kurznachricht und jeder Parameter können durchsucht, gespeichert, geändert, weitergeleitet und dupliziert werden.

Anwendungen wie Prepaid (Bezahlung vom Guthabenkonto) oder Virtual Private Network VPN, die typischerweise vorher schon auf der CSE ausgeführt wurden, können einfach integriert und mit anspruchsvollen SMS Features verbunden werden.

### Kurzbeschreibung der Zeichungen

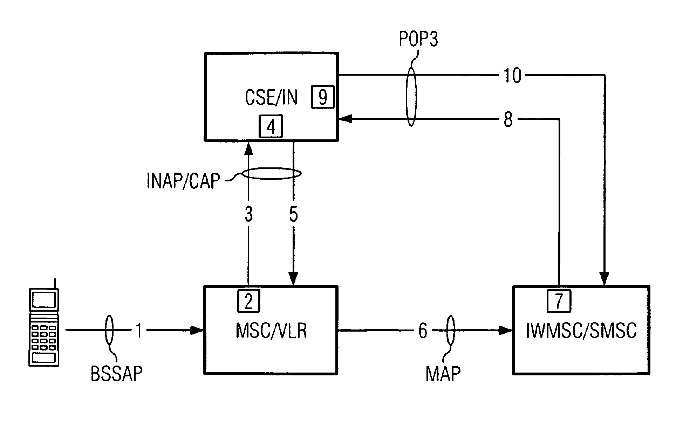

Im folgenden wird die Erfindung anhand von einem Ausführungsbeispiel erläutert. Dabei zeigt die
Figur 1 den Nachrichtenfluß beim Senden von einer SMS-MO.

### Beschreibung der bevorzugten Ausgestaltungsformen

Wenn eine Mobilvermittlungsstelle (MSC) eine Kurznachricht SMS-MO von einem Mobilfunk Endgerät erhält, 1, (BSSAP_ForwardSMS) so ruft es automatisch die Camel Subscription Information (CSI) aus dem Besuchsregister VLR ab, 2. Dies geschieht z. B. mit TDP: SMSCollectedInfo SMS-CSI

Ist für die Kurznachricht die Information "CSI" vorhanden, so werden die darin enthaltenen Daten verwendet, um einen INAP/CAP Trigger zu unterstützen.

Das CSE überprüft die Daten, welche in der empfangenen Trigger-Nachricht enthalten sind und speichert sie lokal. Die CSE generiert eine einheitliche Referenz ID RefID. Diese wird lokal in der CSE gespeichert, 4, zusammen mit der original Empfänger-Adresse CdPA und allen anderen Daten, die mit der IDPSMS empfangen wurden, 3.

Anschließend liefert die CSE eine neue Called Party Address, CdPA, die die CSE selber adressiert: INAP_CONSMS [SMSCaddress, CdPA=reroutingNo], 5. Diese besteht aus einer

Rerouting Nummer verkettet mit einer RefID im CdPA Feld einer INAP_CON Message.

Die Mobilvermittlungsstelle MSC sendet die Kurznachricht automatisch zum adressierten IWMSC (Interworking MSC) und zum Kurznachrichten-Zentrum SMSC, über die Mobile Application Part Schnittstelle, MAP_forwardSMS [SMSCaddress, CdPA=reroutingNo], 6.

Das Kurznachrichten-Zentrum SMSC ermittelt die Adresse des IN/CSE, 7, (destinationCdPA = CSE/Inaddress detected). Sie leitet die Kurznachricht, beispielsweise über eine POP3 Schnittstelle, an CSE/IN weiter, 8.

Die Daten, die mit INAP_IDPSMS empfangen wurden, 3, müssen in Beziehung gesetzt werden mit der Nachricht, welche in forwardSMS empfangen werden, 8.

Da die Rerouting Number die Adresse der CSE selber identifiziert, erkennt die CSE, dass es sich um eine weitergeleitete Kurznachricht handelt. Wenn die CSE eine Kurznachricht mit Rerouting Number erhält, wird die RefID ermittelt und die IDPSMS Daten, welche zuvor gespeichert wurden, anhand dieser RefID durchsucht, 9.

Die CSE kann nun Parameter und Kurznachrichten-Inhalt gegebenenfalls wie verlangt bearbeiten, 9, und die Nachricht weiterleiten., 10.

## Patentansprüche

1. Verfahren zur Erweiterung eines Kurznachrichtendienstes bei dem
- eine erste Mobilvermittlungsstelle (MSC) eine Kurznachricht empfängt (1), und
- die **erste** Mobilvermittlungsstelle (MSC) Informationen **(SMS-CSI)** bezüglich eines Triggers **ermittelt,** und
- diese Trigger-Information an **eine** Dienstezentrale **(CSE)** zur Speicherung sendet (3), und
- als Antwort die Adresse der Dienstezentrale (CSE) empfängt (5), und
- die Empfängeradresse der Kurznachricht in die Adresse der Dienstezentrale (CSE) ändert, und
- die Kurznachricht an ein Kurznachrichtenzentrum (SMSC) oder eine zweite Mobilvermittlungsstelle (IWMSC) sendet (6) zur Weiterleitung.

2. Verfahren nach Patentanspruch 1,
**dadurch gekennzeichnet, dass**
der **entsprechende** Trigger gesetzt wird, abhängig von Informationen (CSI) die die **erste** Mobilvermittlungsstelle (MSC) von einem Besucherregister (VLR) erhält.

3. Verfahren zur Erweiterung eines Kurznachrichtendienstes bei dem
- eine Dienstezentrale (CSE) Triggerinformation von einer ersten Mobilvermittlungstelle (MSC) empfängt und speichert (3), **wobei die Triggerinformation von der ersten Mobilvermittlungsstelle (MSC) nach Empfang einer Kurznachricht ermittelt wurde,** und
- in der Dienstezentrale (CSE) ein entsprechender Trigger gesetzt wird (4), und
- die Dienstezentrale (CSE) der **ersten** Mobilvermittlungsstelle (MSC) eine neue Empfängeradresse **zur Umleitung der** Kurznachricht zurückliefert (5) und
- die neue Empfängeradresse der Kurznachricht gleich der Adresse der Dienstezentrale (CSE) ist, und
- die Dienstezentrale (CSE) dann eine Kurznachricht von einem Kurznachrichtenzentrum (SMSC) oder einer zweiten Mobilvermittlungsstelle (IWMSC) erhält und
- anhand der Empfängeradresse (CdPA) erkennt, dass es sich um die umgeleitete Kurznachricht handelt, und
- die Kurznachricht dann bearbeitet werden kann, in der Weise, dass Parameter und/oder der Inhalt der Kurznachricht gemäß der Triggerinformation verändert werden kann.

4. Verfahren nach Anspruch 3,
bei dem die Dienstezentrale (CSE) bei Empfang der Triggerinformation einen eindeutigen Identifikator (RefID) für diese Kurznachricht generiert und speichert.

5. Verfahren nach Anspruch 3 oder 4,
bei dem nach Empfang der Kurznachricht **in der Dienstezentrale** (CSE) die zugehörige Triggerinformation anhand des gespeicherten eindeutigen Identifikators **(RefID)** ermittelt wird.

6. Verfahren nach Anspruch 3 oder 5,
bei dem die Dienstezentrale **(CSE)** nach Empfang der umgeleiteten Kurznachricht deren Inhalt verändert.

7. Verfahren nach Anspruch 5 oder 6,
bei dem die Dienstezentrale **(CSE)** nach Empfang der umgeleiteten Kurznachricht deren Parameter verändert, insbesondere die Kurznachricht an mindestens zwei benutzerdefinierte Empfängeradressen weiterleitet.

8. Vorrichtung **(CSE)** zur Erweiterung eines Kurznachrichtendienstes, mit
Mitteln zum Empfang von Triggerinformation von einer ersten Mobilvermittlungstelle (MSC), **wobei die Triggerinformation von der ersten Mobilvermittlungsstelle (MSC) nach Empfang einer Kurznachricht ermittelt wurde** und
Mitteln zum Generieren eines eindeutigen Identifikators **(RefID)** und
Mitteln zum Speichern der empfangenen Triggerinformation und des generierten Identifikators **(RefID),** und
Mitteln zum Setzen eines **entsprechenden** Trigger, und
Mitteln zum Senden einer Antwortnachricht (CSE) an die **erste** Mobilvermittlungsstelle (MSC), die die Adresse der **Vorrichtung (CSE) zur Umleitung der Kurznachricht** enthält und
Mitteln zum Empfangen **der umgeleiteten** Kurznachricht von einem Kurznachrichtenzentrum (SMSC) und
Mitteln zum Bearbeiten der empfangenen Kurznachricht gemäß des gespeicherten Trigger.

## Claims

1. Method for extending a short message service, in which
- a first mobile switching centre (MSC) receives a short message (1) and
- the first mobile switching centre (MSC) detects information (SMS-CSI) relating to a trigger and
- sends this trigger information to a service centre (CSE) for storage (3) and
- receives the address of the service centre (CSE) in response (5) and
- changes the recipient address of the short message to the address of the service centre (CSE) and
- sends the short message to a short message centre (SMSC) or a second mobile switching centre (IWMSC) for forwarding.

2. Method according to claim 1,
**characterized in that** the corresponding trigger is set as a function of information (CSI) which the first mobile switching centre (MSC) obtains from a visitor register (VLR).

3. Method for extending a short message service, in which
- a service centre (CSE) receives and stores trigger information from a first mobile switching centre (MSC) (3), the trigger information from the first mobile switching centre (MSC) being detected on receipt of a short message and
- a corresponding trigger is set in the service centre (CSE) (4) and
- the service centre (CSE) supplies a new recipient address back to the first mobile switching centre (MSC) to reroute the short message (5) and
- the new recipient address of the short message is the same as the address of the service centre (CSE) and
- the service centre (CSE) then receives a short message from a short message centre (SMSC) or a second mobile switching centre (IWMSC) and
- identifies from the recipient address (CdPA) that it is the rerouted short message and
- the short message can then be processed in that parameters and/or the content of the short message can be changed according to the trigger information.

4. Method according to claim 3,
in which the service centre (CSE) generates and stores a unique identifier (RefID) for this short message on receipt of the trigger information.

5. Method according to claim 3 or 4,
in which on receipt of the short message in the service centre (CSE) the associated trigger information is detected from the stored unique identifier (RefID).

6. Method according to claim 3 or 5,
in which the service centre (CSE) changes the content of the rerouted short message on receipt.

7. Method according to claim 5 or 6,
in which the service centre (CSE) changes the parameters of the rerouted short message on receipt, in particular forwards the short message to at least two user-defined recipient addresses.

8. Device (CSE) for extending a short message service, with means for receiving trigger information from a first mobile switching centre (MSC), the trigger information being detected by the first mobile switching centre (MSC) on receipt of a short message and
means for generating a unique identifier (RefID) and
means for storing the received trigger information and the generated identifier (RefID) and
means for setting a corresponding trigger and
means for sending a response message (CSE) to the first mobile switching centre (MSC), containing the address of the device (CSE) to reroute the short message and
means for receiving the rerouted short message from a short message centre (SMSC) and
means for processing the received short message according to the stored trigger.

## Revendications

1. Procédé d'extension d'un service de messages courts, dans lequel
- un premier centre de commutation mobile (MSC) reçoit un message court (1) et
- le premier centre de commutation mobile (MSC) détermine des informations (SMS-CSI) concernant un déclencheur et
- envoie cette information concernant le déclencheur à une centrale de services (CSE) pour mémorisation (3) et
- reçoit comme réponse l'adresse de la centrale de services (5) et
- modifie l'adresse du destinataire du message court en l'adresse de la centrale de services (CSE), et
- envoie le message court à un centre de messages courts (SMSC) ou un deuxième centre de commutation mobile (IWMSC)(6) pour réacheminement.

2. Procédé selon la revendication 1,
**caractérisé en ce que**
le déclencheur correspondant est mis en fonction d'informations (CSI) que le premier centre de commutation mobile (MSC) reçoit par un registre de visiteurs (VLR).

3. Procédé d'extension d'un service de messages courts, dans lequel
- une centrale de services (CSE) reçoit par un premier centre de commutation mobile (MSC) une information concernant un déclencheur et mémorise celle-ci (3), l'information concernant le déclencheur ayant été déterminée par le premier centre de commutation mobile (MSC) après réception d'un message court, et
- un déclencheur correspondant est mis dans la centrale de services (CSE) (4), et
- la centrale de services (CSE) envoie au premier centre de commutation mobile (MSC) une nouvelle adresse du destinataire pour déviation du message court (5), et
- la nouvelle adresse du destinataire du message court est identique à l'adresse de la centrale de services (CSE), et
- la centrale de services (CSE) reçoit ensuite un message court par un centre de messages courts (SMSC) ou un deuxième centre de commutation mobile (IWMSC) et
- reconnaît à l'aide de l'adresse du destinataire (CdPA) qu'il s'agit du message court dévié, et
- le message court peut ensuite être traité, de telle manière que des paramètres et/ou le contenu du message court puissent être modifiés selon l'information concernant le déclencheur.

4. Procédé selon la revendication 3,
dans lequel la centrale de services (CSE), à réception de l'information concernant le déclencheur, génère un identificateur univoque (RefID) pour ce message court et mémorise celui-ci.

5. Procédé selon la revendication 3 ou 4,
dans lequel, après réception du message court dans la centrale de services (CSE), l'information associée concernant le déclencheur est déterminée à l'aide de l'identificateur univoque (RefID) mémorisé.

6. Procédé selon la revendication 3 ou 5,
dans lequel la centrale de services (CSE), après réception du message court dévié, modifie le contenu de celui-ci.

7. Procédé selon la revendication 5 ou 6,
dans lequel la centrale de service (CSE), après réception du message court dévié, modifie les paramètres de celui-ci, en particulier réachemine le message court à au moins deux adresses de destinataires définies par l'utilisateur.

8. Dispositif (CSE) d'extension d'un service de messages courts, comprenant
des moyens pour recevoir une information concernant un déclencheur par un premier centre de commutation mobile (MSC), l'information concernant le déclencheur ayant été déterminée par le premier centre de commutation mobile (MSC) après réception d'un message court, et
des moyens pour générer un identificateur univoque (RefID), et
des moyens pour mémoriser l'information reçue concernant le déclencheur et l'identificateur (RefID) généré, et
des moyens pour mettre un déclencheur correspondant, et
des moyens pour envoyer un message de réponse (CSE) au premier centre de commutation mobile (MSC), qui contient l'adresse du dispositif (CSE) pour la déviation du message court, et
des moyens pour recevoir le message court dévié par un centre de messages courts (SMSC), et
des moyens pour traiter le message court reçu selon le déclencheur mémorisé.
